# EUROPEAN PATENT SPECIFICATION

(11) **EP 0 803 421 B1**
(45) Date of publication and mention of the grant of the patent: **07.11.2001**
(21) Application number: 97106941.4
(22) Date of filing: 25.04.1997
(51) Int. Cl.: B60T 8/00, B60T 13/66

(54) **Brake apparatus for a vehicle**
Bremsvorrichtung für ein Kraftfahrzeug
Dispositif de freinage pour un véhicule

(30) Priority: 26.04.1996 JP 10828096
(43) Date of publication of application: 29.10.1997
(73) Proprietor: DENSO CORPORATION, Kariya-City Aichi-Pref. 448 (JP)
(72) Inventor: Sawada, Mamoru, Kariya-shi, Aichi 448 (JP)
(74) Representative: Winter, Brandl, Fürniss, Hübner, Röss, Kaiser, Polte Partnerschaft

(56) References cited:
- DE-A- 3 410 083
- DE-A- 4 116 009
- DE-A- 4 116 373
- DE-A- 4 224 971
- DE-A- 19 541 601

## Description

### CROSS REFERENCE TO RELATED APPLICATION

This application based upon and claims the benefit of priority of the prior Japanese Patent Application No. 8-108280 filed on April 26, 1996.

### BACKGROUND OF THE INVENTION

### 1. Field of the Invention:

The present invention relates to a brake apparatus for a vehicle, and more particularly, to a brake apparatus for a vehicle to distribute braking force to a plurality of wheels during braking.

### 2. Prior Arts:

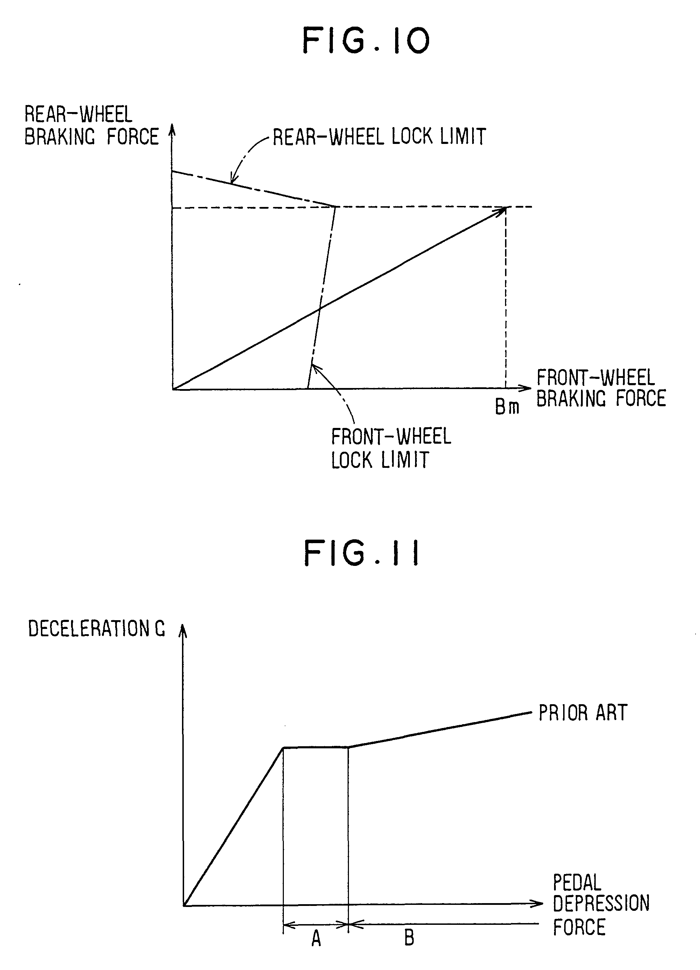

For stability of a vehicle body during braking, braking force of respective wheels of a vehicle is regulated so that front wheels lock first. For example, as shown in FIG. 10, distribution of front-wheel braking force and rear-wheel braking force is ordinarily designed so that front-wheel braking force transversely intersects a front-wheel lock-limit line without rear-wheel braking force intersecting a rear-wheel lock-limit line , as indicated by the solid line.

Consequently, in a case where antiskid control, that is to say, control to regulate brake-fluid pressure of several wheels based on a road-surface friction limit (also termed a lock limit: a friction limit of the wheel and road surface whereat greater friction force cannot be obtained) is performed so as to optimally control a braking state of several wheels of the vehicle when the braking state of the wheels reaches the road-surface friction limit or proximately to the road-surface friction limit in accompaniment to a braking operation by a driver, firstly the front wheels enter antiskid control.

However, after the front wheels have entered antiskid control, the driver must depress a brake pedal by a considerable stroke until rear-wheel braking force reach a point Bm at which substantially maximum braking force of the rear wheels is demonstrated. For this reason, as shown in FIG. 11, there exists a problem wherein not only considerable pedal-depression force becomes necessary, but also a phenomenon occurs wherein deceleration G does not increase in proportion to depression force (interval of A), but deceleration G gradually is increased due to an increase in rear-wheel braking force (interval of B), and large deceleration G is rarely obtained. As a result, a relatively long time is required until braking force of all wheels reaches a maximum, and a problem occurs in braking performance.

Further information regarding the prior art can be found in DE 42 24 971 A1, which discloses a method for increasing the functional security of a braking system having electronic control of the braking force distribution. In particular, a short pressure-reducing pulse that is negligible with regard to the braking action is applied to the front wheels during braking operation, and the reaction of the front wheels to the pressure-reducing pulse is determined. If the reaction indicates an imbalance in the front brakes or a defect, the limitation of the pressure increase in the rear brakes that ensues from the controlling of the braking force distribution is lifted. Consequently, the rear wheels yield a higher contribution to the braking in this situation.

DE 41 16 009 A1 discloses a hydraulic vehicle braking system with an anti-block system (ABS) that is constructed such that, when there is the danger of wheel blockage, the braking force amplification is increased on at least one wheel such that a higher pressure is generated in the main brake cylinder. The braking force of the rear wheels is increased via this higher pressure until the ABS inhibits an unallowable increase in pressure.

DE 34 10 083 A1 discloses a pressure-actuated braking system with brake-slip control for a motor vehicle equipped with a control or regulating system that electronically senses the beginning of brake-slip control operation, wherein the control or regulating system uses the start of a brake-slip control operation on one or several wheels as a signal to keep increasing the braking pressure, at least for some of the wheels not yet undergoing brake-slip control operation, above the pressure established on the wheel braking cylinders through actuation of the brake by the driver until the brake-slip control also sets in for those wheels.

DE 195 41 601 A1, which was published on 15.5.97, discloses a method and apparatus for controlling the braking system of a vehicle in which, during braking operation in situations where maximal transmission of the braking force is desired, the braking force on the rear wheels of the vehicle is increased to a value above that set forth by the braking force distribution and the driver, whereas no increase is effected on the front wheels.

### SUMMARY OF THE INVENTION

It is an object of the present invention to provide a brake apparatus for a vehicle to promptly increase braking force and enhance braking performance during braking operation by a driver.

In accordance with the invention, this and other objects cited hereinbelow are achieved by the brake apparatus as defined in independent claim 1. Preferred embodiments of the invention are defined in the dependent claims.

In a brake apparatus for a vehicle according to the

present invention, at a time when adjustment of brake-fluid pressure by a brake-fluid pressure adjusting device is started with respect to any wheel, brake-fluid pressure with respect to another wheel whereat adjustment of brake-fluid pressure by the brake-fluid pressure adjusting device has not yet been undertaken, is increased.

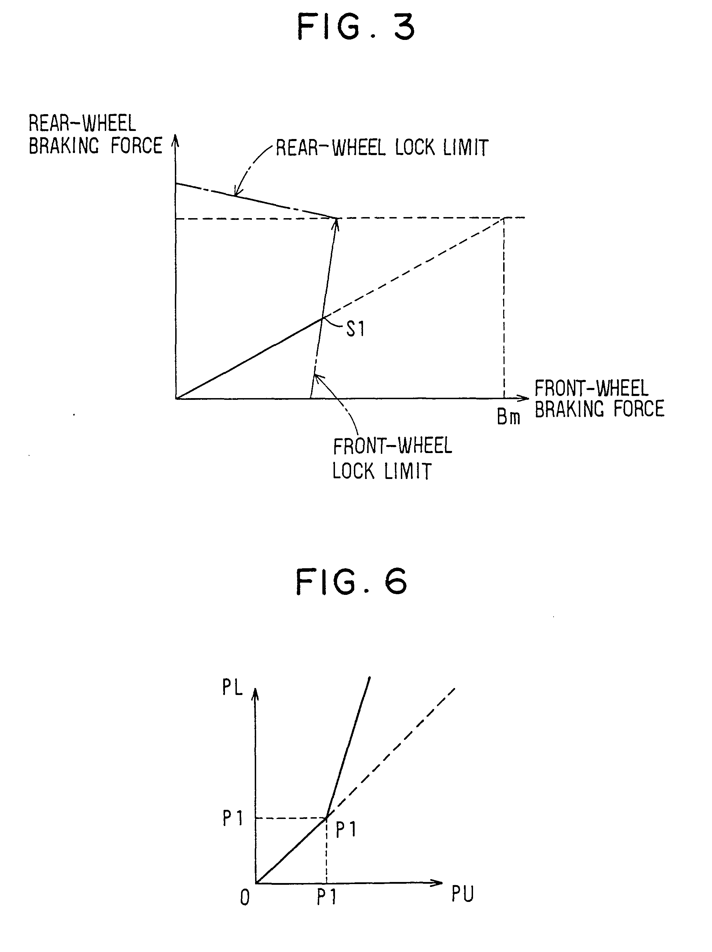

As a result, as is exemplified in FIG. 3, braking force is increased to a point BM without the braking operation by the driver, and substantially maximum braking force can be exhibited rapidly with respect to the other wheel (in FIG. 3, the rear wheels) as well. Consequently, braking force during braking operation by the driver is promptly increased and braking performance can be enhanced.

More specifically, the brake apparatus for a vehicle has a brake-fluid pressure generating device to generate brake-fluid pressure in correspondence to a state of brake operation by a driver; a first wheel braking force generating device to receive brake-fluid pressure from the brake-fluid pressure generating device and cause braking force to be generated at a first wheel; a second wheel braking force generating device to receive brake-fluid pressure from the brake-fluid pressure generating device and cause braking force to be generated at a second wheel; a brake fluid conduit to communicate the brake-fluid pressure generating device with the first and second wheel braking-force generating devices; a brake-fluid pressure adjusting device to adjust brake-fluid pressure applied to the first and second wheel braking-force generating devices in response to a road-surface limit in a braking state of the first and second wheels so as to optimally adjust a braking state of the first and second wheels; and an increasing device to increase, at a time when adjustment of brake-fluid pressure applied to either the first or the second wheel braking-force generating device by the brake-fluid pressure adjusting device is started, brake-fluid pressure applied to the other wheel braking force generating device whereat adjustment of brake-fluid pressure by the brake-fluid pressure adjusting device has not yet been undertaken, to exceed the brake-fluid pressure due to the brake-fluid pressure generating device.

The increasing device can be composed of containing device disposed outside the brake fluid conduit from the brake-fluid pressure generating device to the several wheel braking-force generating device, which can contain a predetermined brake-fluid quantity and a discharging device to take in brake fluid from the containing device, discharge brake fluid toward at least one wheel braking-force generating device whereat adjustment of brake-fluid pressure by the brake-fluid pressure adjusting device has not yet been started, and increase brake-fluid pressure applied to the wheel braking force generating device to exceed brake-fluid pressure due to the brake-fluid pressure generating device.

Because brake fluid contained in the containing device disposed outside the brake fluid conduit is employed, braking force of a wheel whereat adjustment of brake-fluid pressure has not been started can be promptly boosted without affecting braking operation.

Furthermore, the brake apparatus may provide a control valve disposed in the brake fluid conduit and which can assume a first control state to cause the brake fluid conduit to be in a communicating state and a second control state allowing generation of a predetermined differential pressure between brake-fluid pressure on the wheel braking-force generating device side and brake-fluid pressure on the brake-fluid pressure generating device side. The control valve is controlled at the second control state when discharge of brake fluid is being performed by the discharging device of which a discharge port is connected to the brake fluid conduit between the control valve and the wheel braking-force generating device. As a result, brake fluid is not circulated to the brake-fluid pressure generating device side even when discharge of brake fluid is being performed by the discharging device, as long as differential pressure between brake-fluid pressure on the wheel braking-force generating device side and brake-fluid pressure on the brake-fluid pressure generating device side is within the predetermined differential pressure. That is to say, discharge of brake fluid by the discharging device does not directly affect the brake-fluid pressure generating device side, and so kickback is suppressed and the above-described pressure increase can be performed. Additionally, when the first control state is caused to be obtained at suitable timing at a time other than discharge of brake fluid by the discharging device, communication of the brake fluid conduit is in effect, and so circulation of brake fluid to the brake-fluid pressure generating device also can be accomplished without hindrance such as kickback to a brake pedal.

Additionally, it is preferred that the increasing device be provided with a maintaining device to maintain a pressure increase performed by the discharging device. The discharge device performs the pressure increase by discharging brake fluid generated by the brake-fluid pressure generating device, or brake fluid released from a wheel braking-force generating device during adjustment of brake-fluid pressure being started by the brake-fluid pressure adjusting device, toward a wheel braking-force generating device whereat adjustment of brake-fluid pressure by the brake-fluid pressure adjusting device has not yet been started, in order that the brake-fluid pressure applied to the wheel braking-force generating device is increased to beyond brake-fluid pressure generated by the brake-fluid pressure generating device. As a result, substantially maximum braking force can be caused to be exhibited still more rapidly with respect to another wheel as well.

The maintaining device maintains differential pressure between brake-fluid pressure in the brake fluid conduit extending from a brake-fluid discharging side of the discharging device to the wheel braking-force generating device and brake-fluid pressure at the brake-fluid pressure generating device. Brake-fluid pressure at the brake-fluid pressure generating device is established to be a value attenuated at a predetermined ratio relative to brake-fluid pressure in the brake fluid conduit extending from a brake-fluid discharging side of the discharging device. Therefore, even when discharge of brake fluid is performed by the discharging device, brake fluid is not circulated to the brake-fluid pressure generating device side, as long as differential pressure between brake-fluid pressure on the wheel braking-force generating device side and brake-fluid pressure on the brake-fluid pressure generating device side is within the predetermined differential pressure. As a result, the discharge of brake fluid by the discharging device does not directly affect the brake-fluid pressure generating device side, and kickback is suppressed. Additionally, when brake fluid pressure is caused to be lowered at suitable timing at a time other than the discharge of brake fluid by the discharging device, pressure differential is substantially eliminated. Accordingly, circulation of brake fluid to the brake-fluid pressure generating device also can be accomplished without hindrance such as kickback.

The brake-fluid pressure-adjusting device may include a pressure-increasing control valve disposed for each wheel in the brake fluid conduit to cause the brake fluid conduit to be communicated during nonadjustment of brake fluid pressure and during pressure-increasing adjustment and to be interrupted during pressure-reducing adjustment, and a pressure-reducing control valve disposed for each wheel in a conduit for pressure-reducing use from the brake fluid conduit to the containing device to cause the conduit for pressure-reducing use to be communicated during pressure-reducing adjustment and to be interrupted during pressure-increasing adjustment and during nonadjustment of brake fluid pressure. Because the pressure-increasing control valve opens the brake fluid conduit connecting to the wheel braking-force generating device of the wheel at which adjustment of brake fluid pressure has not been undertaken, when the discharging device discharges brake fluid to the brake fluid conduit between the respective pressure-increasing control valves and the maintaining device, braking force can be promptly boosted at the wheel of which brake fluid pressure has not yet been adjusted by the brake-fluid pressure-adjusting device.

### BRIEF DESCRIPTION OF THE DRAWINGS

These and other objects, features and characteristics of the present invention will be appreciated from a study of the following detailed description, the appended claims, and drawings, all of which form a part of this application. In the drawings:
FIG. 1 is a schematic diagram indicating a brake apparatus of a first embodiment;
FIG. 2 is a flowchart of brake fluid pressure control processing by an electronic control unit for an antiskid system according to the first embodiment;
FIG. 3 is an explanatory diagram of front- and rear-wheel braking-force change during braking in the first embodiment;
FIG. 4 is an explanatory diagram of wheel-speed and brake-fluid pressure change during braking in the first embodiment;
FIG. 5 is an explanatory diagram of change in deceleration G during braking in the first embodiment;
FIG. 6 is an explanatory diagram of functioning of a proportioning control valve;
FIG. 7 is a schematic diagram indicating a brake apparatus of a second embodiment;
FIG. 8 is an explanatory diagram of functioning of a master cutoff valve;
FIG. 9 is a sectional view indicating a structure of the master cutoff valve;
FIG. 10 is an explanatory diagram of front- and rear-wheel braking-force change during braking in a prior art; and
FIG. 11 is an explanatory diagram of change in deceleration G during braking in the prior art.

### DETAILED DESCRIPTION OF THE PREFERRED EMBODIMENTS

### [First Embodiment]

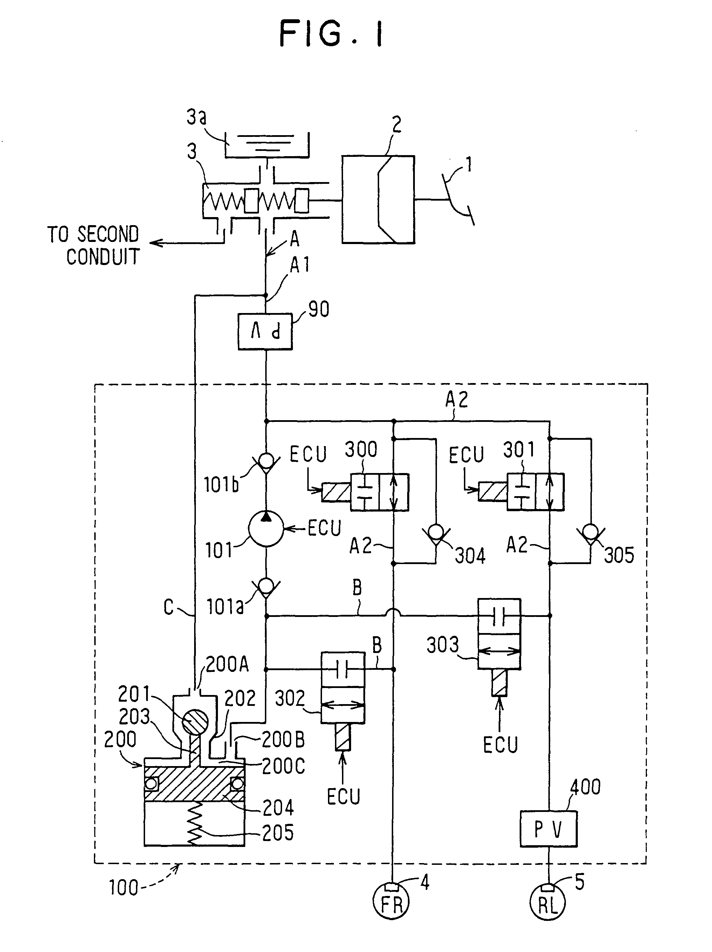

FIG. 1 is a schematic diagram indicating a brake apparatus for a vehicle according to a first embodiment of the present invention. In the present embodiment, the brake apparatus is applied in a vehicle of diagonal brake fluid conduits provided with respective conduits connecting wheel cylinders of a front-right wheel FR and a rear-left wheel RL and connecting wheel cylinders of a front-left wheel and a rear-right wheel in a front-wheel drive, four-wheeled vehicle.

In FIG. 1, a brake pedal 1 depressed by a driver when applying braking force to the vehicle is connected to a booster 2. Depression force applied to the brake pedal 1 and pedal stroke thereof are conveyed to this booster 2. The booster 2 has at least two chambers, a first chamber and a second chamber, and for example the first chamber can be utilized as an atmospheric-pressure chamber and the second chamber can be utilized as a vacuum chamber. Intake-manifold vacuum of an engine or vacuum due to a vacuum pump is employed as the vacuum to be introduced in the vacuum chamber. Accordingly, this booster 2 directly boosts the driver's pedal depression or pedal stroke by a pressure differential of the atmospheric-pressure chamber and the vacuum chamber. The booster 2 has a push rod or the like to convey the depression force or pedal stroke boosted in this way to a master cylinder 3 (corresponding to the brake-fluid pressure-generating device). The master cylinder 3 generates master-cylinder pressure PU when the push rod compresses a master piston disposed in the master cylinder 3. Further, the master cylinder 3 is provided with an independent master reservoir 3a to supply brake fluid to within the master cylinder 3 or to accumulate excess brake fluid within master cylinder 3.

This master-cylinder pressure PU is conveyed via a proportioning control valve 90 (corresponding to the maintaining device) and an antiskid system 100 to a first wheel cylinder 4 (corresponding to the first wheel braking-force generating device) for the front-right wheel FR and a second wheel cylinder 5 (corresponding to the second wheel braking-force generating device) for the rear-left wheel RL. Description hereinafter is with regard to the side of the front-right wheel FR and the rear-left wheel RL, but because this is perfectly similar to the front-left wheel (corresponding to the third wheel) and the rear-right wheel (corresponding to the fourth wheel) which are connected by the second brake fluid conduit, description will be omitted.

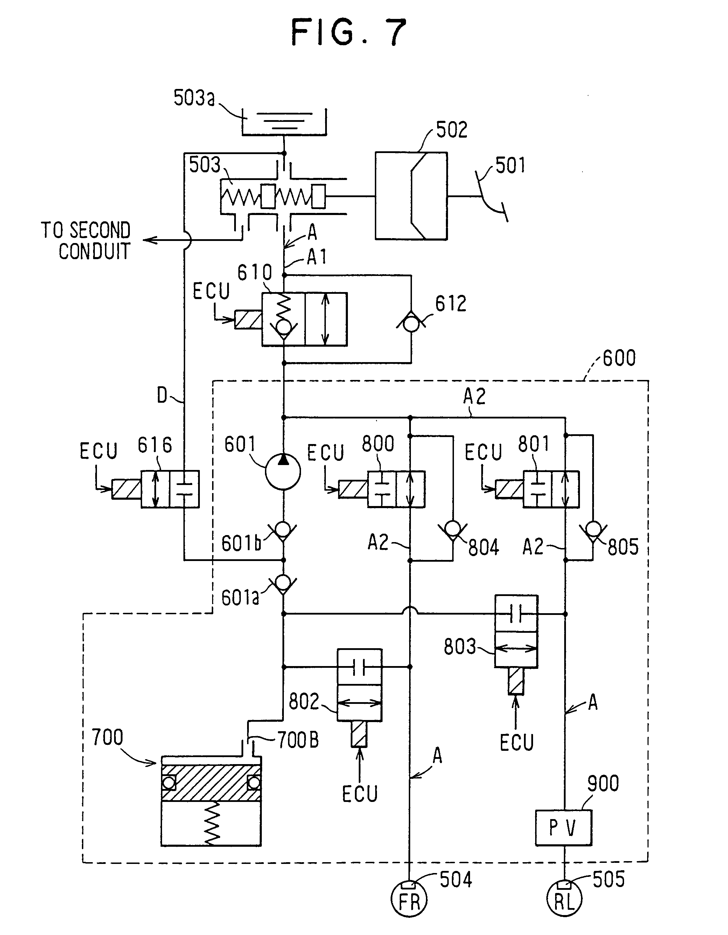

The proportioning control valve 90 has a function to convey basic pressure of the brake fluid to a downstream side with a predetermined attenuation ratio when the brake fluid is flowing in a normal direction. Herein, because the proportioning control valve 90 is connected in reverse, the wheel-cylinder 4 and 5 side becomes the basic-pressure side, and master-cylinder 3 side is the downstream side. This relationship of pressures is shown in FIG. 6. Basic pressure PL is indicated by the vertical axis, and master-cylinder pressure PU by the horizontal axis. Additionally, in a range below a split-point pressure P1, the master-cylinder pressure PU and the basic pressure PL become equivalent.

The antiskid system 100 is provided with a structure which will be described hereinafter. Firstly, a conduit A connected to the proportioning control valve 90 connected in reverse is divided into two branches which are connected to the wheel cylinders 4 and 5 as second conduit parts A2 thereof. A first pressure-increasing control valve 300 to control increase in brake-fluid pressure to the first wheel cylinder 4 is disposed in one of the second conduit parts A2. A second pressure-increasing control valve 301 to control increase in brake-fluid pressure to the second wheel cylinder 5 is disposed in the other of the second conduit parts A2.

These first and second pressure-increasing control valves 300 and 301 are structured as a two-way valve of which a communicated/interrupted state can be controlled by an electronic control unit ECU for the antiskid-system 100. Accordingly, when this two-way valve has been controlled in a communicated state, brake-fluid pressure due to the master-cylinder pressure PU via the proportioning control valve 90 or the discharge of brake fluid from a pump 101 can be applied to the respective wheel cylinders 4 and 5. During normal braking wherein antiskid control is not executed, these first and second pressure-increasing control valves 300 and 301 are controlled to a constantly communicated state. Additionally, safety valves 304 and 305 are respectively disposed in parallel to the pressure-increasing control valves 300 and 301, and are structured so as to eliminate excess brake-fluid pressure from the wheel-cylinder 4 and 5 side. The above-described antiskid system 100 and the electronic control unit ECU correspond to the brake-fluid pressure adjusting device.

Additionally, a first pressure-reducing control valve 302 and a second pressure-reducing control valve 303 as a two-way valve of which a communicated/interrupted state can be controlled by the electronic control unit ECU for the antiskid system 100 are respectively disposed in conduits B which respectively extend from the second conduit parts A2 between the first and second pressure-increasing control valves 300 and 301 and the respective wheel cylinders 4 and 5 to a second reservoir hole 200B of a reservoir 200 (corresponding to the containing device) disposed outside the conduit A. During normal braking, these first and second pressure-reducing control valves 302 and 303 are constantly caused to be in an interrupted state.

This reservoir 200 has a first reservoir hole 200A which receives the flow of brake fluid from a conduit C which has pressure equivalent to the master-cylinder pressure PU. A ball valve 201 is disposed further into the interior of the reservoir 200 than this reservoir hole 200A. Accordingly, a rod 203 to cause this ball valve 201 to be moved up or down in a range of a predetermined stroke is provided on an underside of this ball valve 201. A piston 204 interlocking with the rod 203 is provided within a reservoir chamber 200C. This piston 204 slides downwardly in a case where brake fluid has flowed in the reservoir chamber 200C from the first reservoir hole 200A or the second reservoir hole 200B, accumulating brake fluid within the reservoir chamber 200C.

Additionally, when the piston 204 moves downwardly in a case where brake fluid has been accumulated in this way, the rod 203 also moves downwardly in accompaniment thereto, and the ball valve 201 contacts a valve seat 202. Accordingly, when brake fluid corresponding to the predetermined stroke of the rod 203 or more has been accumulated within the reservoir chamber 200C, the flow of brake fluid between the intake side of the pump 101 and a first conduit part A1 via the conduit C is interrupted by the ball valve 201 and the valve seat 202.

Moreover, the pump 101 (corresponding to the discharging device) is disposed in a position at which safety valves 101a and 101b are connected at intake and discharge sides of the pump 101, and the pump 101 takes in brake fluid between the first and second pressure-reducing control valves 302 and 303 and the second reservoir hole 200B and discharges brake fluid to the second conduit part A2 between the proportioning control valve 90 and the first and second pressure-increasing control valves 300 and 301.

Additionally, a proportioning control valve 400 is disposed immediately before the wheel cylinder 5 of the rear-left wheel RL. This proportioning control valve 400 has an effect of conveying basic pressure of the brake fluid to a downstream side with a predetermined attenuation ratio when the brake fluid is flowing in a normal direction. This is to cause the front-wheel side to priorly lock during braking operation by slightly reducing rear-wheel brake-fluid pressure during braking in comparison with the front-wheel brake-fluid pressure, to ensure stability of the vehicle body.

For these first and second pressure-increasing control valves 300 and 301, first and second pressure-reducing control valves 302 and 303, and the pump 101, the electronic control unit ECU (not illustrated) for the antiskid-system 100 controls brake fluid pressure of each wheel cylinder.

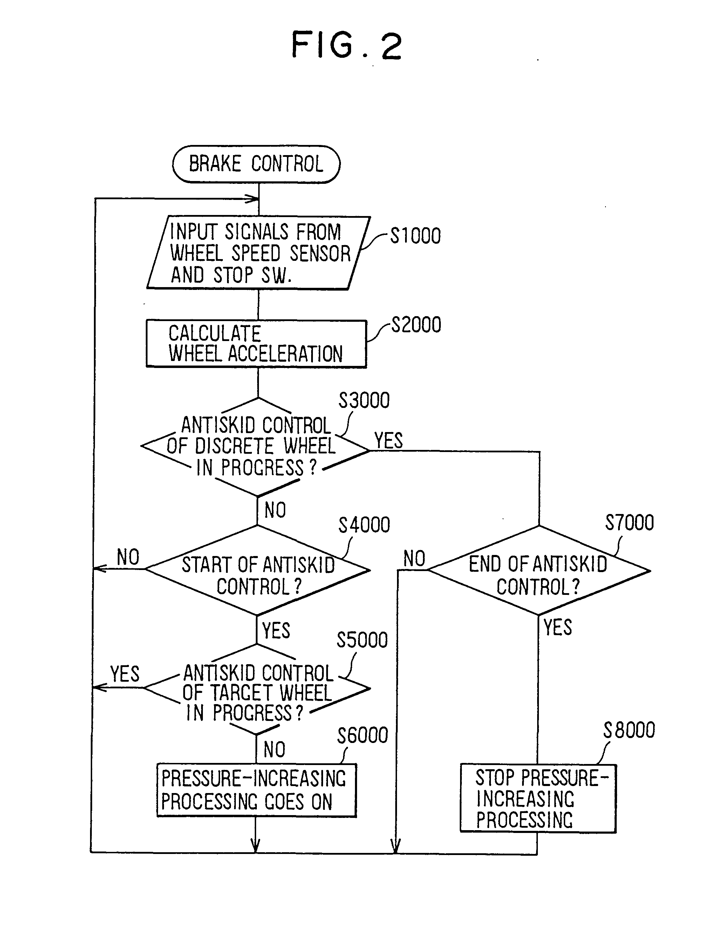

Brake control by the above-mentioned electronic control unit ECU for the antiskid-system 100 will be described with reference to the flowchart of FIG. 2. This processing is to be performed discretely for each wheel. In the description hereinafter, processing with respect to the front-right wheel FR will be described, this processing is performed similarly for the other wheels.

When the brake-control processing indicated in FIG. 2 is started, firstly the electronic control unit ECU is input with respective detection data from a wheel-speed sensor (not illustrated) and a stop switch of the brake pedal 1 (S1000). Subsequently, wheel acceleration is calculated from the wheel-speed sensor detection data (S2000).

Next, it is determined whether the discrete wheel (the front-right wheel FR) is in the midst of antiskid control (S3000), and when antiskid control is taken not to be in progress for the discrete wheel ("NO" in S3000), subsequently it is determined whether a starting condition for antiskid control has been obtained for the discrete wheel (S4000). When not an antiskid starting condition ("NO" in S4000), the processing to be executed returns to step S1000.

Herein, when the driver has depressed the brake pedal 1, if it is determined based on a state of wheel acceleration or the like that the braking state of the front-right wheel FR has become a road-surface limit or proximately to a road-surface limit, that is, a starting condition for antiskid control is fulfilled ("YES" in S4000), the processing to be executed is transferred to step S5000. Further, due to having been determined to be "YES" in step S4000, antiskid control through separate processing, although not illustrated, is simultaneously started for the front-right wheel FR.

In step S5000, it is determined whether the target wheel, herein the rear-left wheel RL existing in the same first brake fluid conduit, is in the midst of antiskid control. Due to the existence of the proportioning control valve 400, the front wheel priorly reaches a front-wheel lock limit line and the front-wheel side priorly begin antiskid control, as is indicated by point S1 in FIG. 3. Therefore, at the timing with which the front-right wheel FR has begun antiskid control, the rear-left wheel RL is usually not in the midst of antiskid control ("NO" in S5000).

Consequently, pressure-increasing processing for the target wheel subsequently goes on (S6000). That is to say, pressure-increasing processing discharges brake fluid to the second conduit part A2 via the conduit C and the reservoir 200 by driving the pump 101. Because the proportioning control valve 90 exists between the second conduit part A2 and the first conduit part A1, the second conduit part A2 can be maintained at a higher pressure than the master-cylinder 3 side, as shown in FIG. 6.

At this time, the front-right wheel FR side enters antiskid control and pressure-reducing control is performed firstly. Accordingly, the pressure-increasing control valve 300 is in an interrupted state, whereas for the rear-left wheel RL, the pressure-increasing control valve 301 which has not entered antiskid control is in a communicated state. For this reason, brake-fluid pressure which has been caused to be a higher pressure than the master-cylinder 3 side due to discharge of the pump 101 and the existence of the proportioning control valve 90 is applied from the pressure-increasing control valve 301 via the proportioning control valve 400 to the wheel cylinder 5 of the rear-left wheel RL, and braking force for the rear-left wheel RL rises sharply. That is to say, braking force on the rear-wheel side rises sharply from the point in time that the front wheel reaches the lock limit, as shown by the solid-line arrow in FIG. 3. As a result, sufficient braking force is generated for the rear wheel as well and high braking performance can be exhibited before the driver deeply depresses the brake pedal 1.

Moreover, in step S4000, in a case of having been determined not to be a condition for starting antiskid control of the discrete wheel, or in a case where in step S5000 the target wheel has been determined to already be in antiskid control, the processing to be executed returns to step S1000 without executing step S6000.

Additionally, in step S3000, in a case where the target wheel has been determined to already be in antiskid control, end determination of antiskid control for the discrete wheel is performed (S7000). When an ending condition for antiskid control has not been fulfilled ("NO" in S7000), the processing to be executed returns as-is to step S1000. When an ending condition for antiskid control has been fulfilled ("YES" in S7000), pressure-increasing processing for the target wheel is stopped (S8000). That is to say, operation of the pump 101 is stopped, and discharge of brake fluid to the second conduit part A2 is stopped. Simultaneously, antiskid control for the discrete wheel by processing not illustrated is stopped.

Furthermore, as was described above, processing similar to FIG. 2 is performed for the rear-left wheel RL as well. Moreover, a relationship similar to the foregoing front-right wheel FR and rear-left wheel RL exists also with respect to a combination of front-left wheel and rear-right wheel.

According to the first embodiment, when adjustment of brake-fluid pressure by the antiskid system 100 as the brake-fluid pressure adjusting device is started for any wheel, brake-fluid pressure is increased for other wheels for which adjustment of brake-fluid pressure by the antiskid system 100 has not yet been undertaken, as was described above.

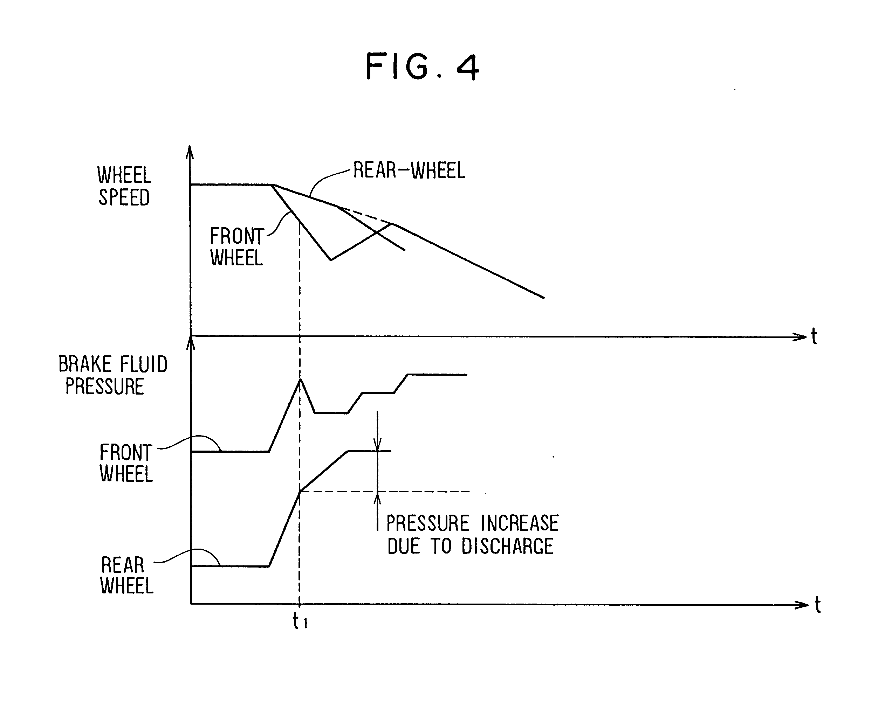

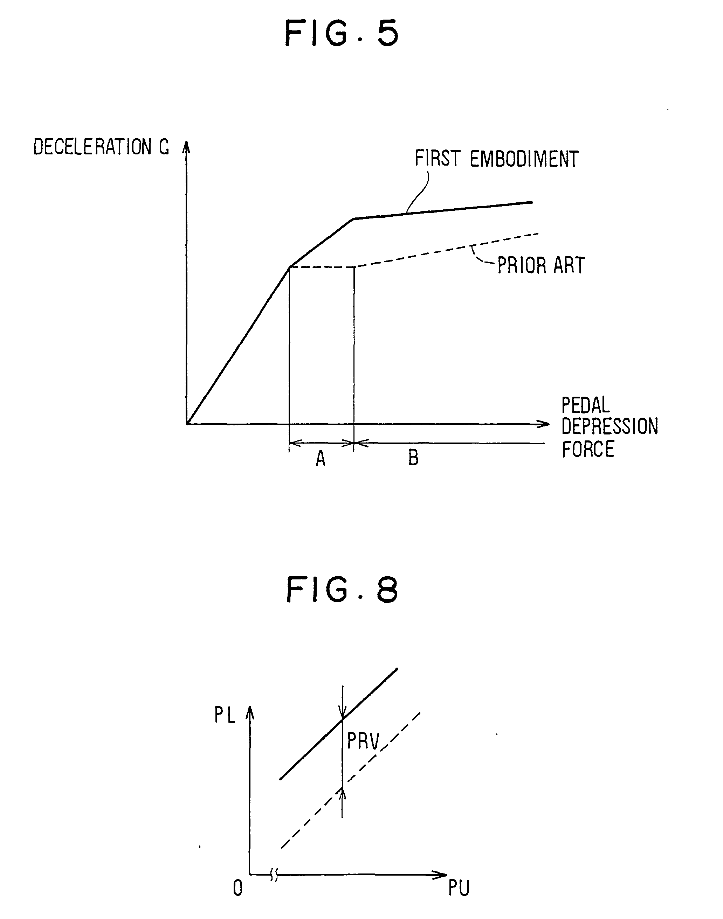

For example, as shown in FIG. 4, the rear-wheel side is pressure-increased by brake fluid discharged by the pump 101 being operated from time t1 at which the front wheel began antiskid control. For this reason, deceleration of wheel speed of the rear wheels becomes large in comparison with a case wherein pressure is not increased (indicated by broken lines). Consequently, with the first embodiment, deceleration G can be increased promptly as shown in FIG. 5 even after the front wheel has entered antiskid control, and braking performance can be enhanced.

Additionally, with the first embodiment, brake fluid expelled from the pressure-reducing control valve 302 during the pressure-reducing adjustment of antiskid control is employed by the pump 101 via the pressure-increasing valve 301 as brake fluid to increase brake fluid pressure of the wheel cylinder 5 of the rear-left wheel RL which has not yet entered antiskid control. Therefore, the rise in braking force of the rear-left wheel RL is augmented, and braking efficiency is further heightened.

In the first embodiment, the processing of steps S4000, S5000, and S6000 correspond to the increasing device.

### [Second Embodiment]

FIG. 7 is a schematic diagram indicating a second embodiment according to the present invention. Because a brake pedal 501, a booster 502, a master cylinder 503, a master reservoir 503a, a pump 601, pressure-increasing control valves 800 and 801, pressure-reducing control valves 802 and 803, safety valves 804 and 805, a proportioning control valve 900, and wheel cylinders 504 and 505 are respectively the same as the brake pedal 1, the booster 2, the master cylinder 3, a master reservoir 3a, the pump 101, the pressure-increasing control valves 300 and 301, the pressure-reducing control valves 302 and 303, the safety valves 304 and 305, the proportioning control valve 400, and the wheel cylinders 4 and 5 according to the first embodiment, detailed description concerning these will not be made. Further, a second brake fluid conduit distributes brake-fluid pressure to a front-left wheel and a rear-right wheel, but because this is the same as the front-right wheel FR and rear-left wheel RL indicated in FIG. 7, description will be omitted.

The second embodiment differs from the first embodiment in the point that in the conduit A, a master cutoff valve 610 (corresponding to the control valve) is disposed in substitution for the proportioning control valve 90 of the first embodiment between the master cylinder 503 and an antiskid system 600.

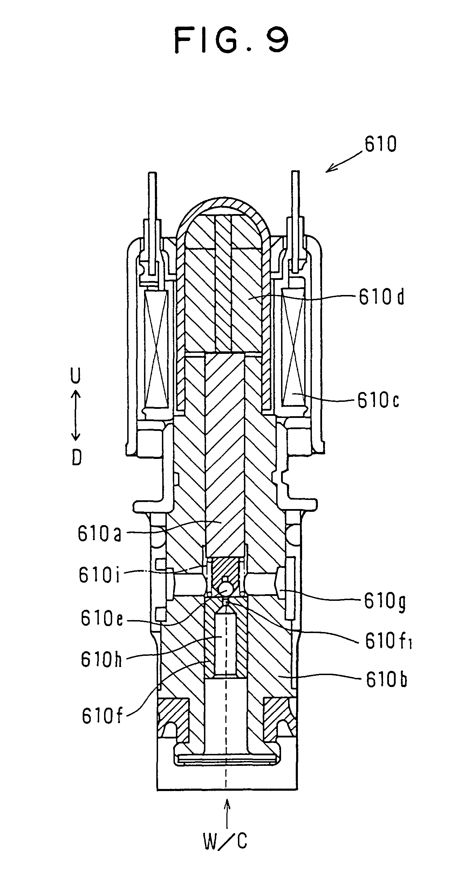

The master cutoff valve 610 has a port having a differential-pressure valve (corresponding to a second control state) and a port realizing a communicated state (corresponding to a first control state). The master cutoff valve 610 is ordinarily in a communicated state. But, in a case where brake-fluid pressure is being controlled by the antiskid system 600, the master cutoff valve 610 is switched to the port having the differential-pressure valve at a predetermined timing, so that brake fluid pressure of the second conduit part A2 becomes higher than brake fluid pressure of the first conduit part A1 as shown in FIG. 8. As a result, a differential-pressure PRV is established between the first conduit part A1 and the second conduit part A2. The switch of the master cutoff valve is performed by an electronic control unit ECU (not illustrated) for the antiskid system 600. The electronic control unit ECU and the antiskid system 600 correspond to the brake-fluid pressure adjusting device.

The master cutoff valve 610, to be described in detail, is chiefly provided with a shaft 610a to slide in the directions of arrows U and D, a guide 610b into which this shaft 610a is matingly inserted, a plunger 610d connected to a rear end of the shaft 610a and driven by excitation force of a coil 610c to cause the shaft 610a to be moved, a ball 610e disposed at the tip of the shaft 610a to switch communication and interruption states of the conduit A, a seat 610f having an opening 610f1 of small diameter wherein the ball 610e is seated, and a spring 610i to urge the shaft 610a in the direction of arrow U, as shown in FIG. 9. Accordingly, the master-cylinder 503 side and the wheel-cylinder 504 and 505 side are connected by a hydraulic path (indicated by the dotted line) passing through a master-cylinder side communicating hole 610g, a gap formed by the ball 610e and seat 610f, and a wheel-cylinder side communicating hole 610h communicated with the opening 610f1.

Accordingly, at this master cutoff valve 610, the shaft 610a is ordinarily moved in the arrow-U direction due to the urging force of the spring 610i so that the hydraulic path is opened. When the coil 610c is electrified, the shaft 610a counters the urging force of the spring 610i, moves in the arrow-D direction, is seated on the seat 610f, and the hydraulic path is closed.

Further, a depression-increasing valve 612 is disposed in parallel to the master cutoff valve 610. When the brake pedal 501 has been further depressed by the driver, it becomes possible for brake fluid to flow into the wheel-cylinders 504 and 505 side from the master-cylinder 503 side.

By being structured in this way, even in a case where this second brake-fluid pressure PL has increased with respect to master-cylinder pressure PU second brake-fluid pressure PL is maintained when the increased pressure is a differential pressure PRV or less. Additionally, at least master-cylinder pressure PU can be assured of being applied to the wheel cylinders 504 and 505 due to the depression-increasing valve 612 being connected, even if there arises a problem such that the master cutoff valve 610 has been stuck at the valve position of the differential-pressure valve or faulty drive of the pump 601 (corresponding to a discharging device) has occurred.

Additionally, a reservoir 700 disposed outside the conduit A is connected to the brake-fluid intake side of the pump 601. This reservoir 700 accumulates brake fluid in a case where brake fluid has flowed in from a reservoir hole 700B, and causes brake fluid to flow out to an external portion as required.

Additionally, a conduit D from the master reservoir 503a is provided on the intake side of the pump 601, and an intake control valve 616 which is a two-way valve and of which a communicated/interrupted state can be controlled by an electronic control unit ECU for the antiskid system 600 is disposed in this conduit D.

Brake control by the above-described electronic control unit ECU for the antiskid system 600 is fundamentally the same as the brake-control processing indicated in FIG. 2, but the processing of step S6000 and S8000 with respect to the target-wheel pressure-increasing processing differs.

Namely, in the target-wheel pressure-increasing processing "on" of step S6000, the master cutoff valve 610 is switched to the port having the differential-pressure valve, the intake control valve 616 is switched to a communicated state, and moreover the pump 601 is operated. As a result, brake fluid of the master reservoir 503a is discharged via the conduit D to the second conduit part A2. Because the master cutoff valve 610 has been switched to the port having the differential-pressure valve between the second conduit part A2 and the first conduit part A1, brake fluid pressure of the second conduit part A2 can be maintained at a pressure higher than the master-cylinder 503 side by a value corresponding to the differential pressure PRV.

At this time, the front-right wheel FR enters antiskid control and pressure-reducing control is performed firstly, and so the pressure-increasing control valve 800 is in an interrupted state, whereas for the rear-left wheel RL, the pressure-increasing control valve 801 which has not entered antiskid control is in a communicated state. For this reason, brake-fluid pressure which has been caused to be a higher pressure than the master-cylinder 503 side is applied from the pressure-increasing control valve 801 via the proportioning control valve 900 to the wheel cylinder 505 of the rear-left wheel RL, and braking force for the rear-left wheel RL rises sharply. That is to say, braking force on the rear-wheel side rises sharply from the point in time that the front wheel reaches the lock limit, similarly to the example shown in FIG. 3. Therefore, sufficient braking force is generated for the rear wheel as well and high braking performance similarly to the foregoing first embodiment can be exhibited without the driver deeply depressing the brake pedal 501.

In step S8000, with the target-wheel pressure-increasing processing "off," the master cutoff valve 610 is switched in a communicated state, the intake control valve 616 is switched in an interrupted state, and moreover the pump 601 is stopped.

Further, as was described above, processing similar to the above-described processing is performed for the rear-left wheel RL as well. Moreover, a relationship similar to the foregoing front-right wheel FR and rear-left wheel RL exists also with respect to a combination of front-left wheel and rear-right wheel.

Additionally, with this second embodiment as well, brake fluid expelled from the pressure-reducing control valve 802 during the pressure-reducing adjustment of antiskid control is employed by the pump 601 via the pressure-increasing valve 801 as brake fluid to increase brake fluid pressure of wheel cylinder 505 of the rear-left wheel RL which has not yet entered antiskid control. Accordingly, the rise in braking force of the rear-left wheel RL comes to be augmented, and braking efficiency is further heightened.

In the second embodiment, the master cutoff valve 610 corresponds to the maintaining device, and the intake control valve 616 and the pump 601 to the increasing device.

### [Other Embodiment]

The above-described several embodiments were examples relating to a vehicle of diagonal brake fluid conduits provided with respective brake fluid conduits connecting the front-right wheel FR and the rear-left wheel RL and connecting the front-left wheel and the rear-right wheel in a front-wheel drive, four-wheeled vehicle. However, the present invention is applicable even with rear-wheel drive, or in a two-wheeled vehicle, or in another two-circuit brake system (for example, a front and rear two-circuit system or the like).

## Claims

1. A brake apparatus for use in a vehicle, comprising:
a brake-fluid pressure generating device (3) for generating brake-fluid pressure in correspondence to a state of brake operation by a driver;
a first wheel braking force generating device (4) which receives brake-fluid pressure from said brake-fluid pressure generating device and is suitable to generate braking force at a first wheel;
a second wheel braking force generating device (5) which receives brake-fluid pressure from said brake-fluid pressure generating device and is suitable to generate braking force at a second wheel;
a brake-fluid conduit (A) to communicate said brake-fluid pressure generating device and said first and second wheel braking-force generating devices;
a brake-fluid pressure adjusting device (100) which adjusts brake-fluid pressure applied to said first and second wheel braking-force generating devices in response to a road-surface friction limit input data indicative of a road-surface friction limit in a braking state of each of said first and second wheels so as to optimally adjust a braking state of said first and second wheels; and
a pressure increasing device (90, 101, 200, 300, 301) which increases, at a time when adjustment of brake-fluid pressure applied to either said first or said second wheel braking-force generating device by said brake-fluid pressure adjusting device is started, brake-fluid pressure applied to another wheel braking force generating device, at which adjustment of brake-fluid pressure by said brake-fluid pressure adjusting device has not yet been undertaken, to exceed the brake-fluid pressure due to said brake-fluid pressure generating device; **characterized in that**
said brake-fluid conduit (A) comprises a valve (90; 610) capable of establishing a pressure in a second portion (A2) of said conduit (A) communicating with said first and second wheel braking force generating devices (4, 5) that is a function of and higher than the pressure in a first portion (A1) of said conduit (A) communicating with said brake-fluid pressure generating device (3); and
brake-fluid removed from said first wheel braking force generating device (4) and stored in a reservoir (200; 700) for reducing brake-fluid pressure on said first wheel braking force generating device (4) is used to increase brake-fluid pressure on said second wheel braking force generating device (5).

2. The brake apparatus as recited in claim 1, wherein said pressure increasing device (90, 101, 200, 300, 301) comprises:
a discharging device (101) which takes in brake fluid from said reservoir (200; 700), discharges brake fluid toward at least one of said first and second wheel braking-force generating devices whereat adjustment of brake-fluid pressure by said brake-fluid pressure adjusting device has not yet been started, and increases brake-fluid pressure applied to said at least one of said first and second wheel braking force generating devices to exceed the brake-fluid pressure generated by said brake-fluid pressure generating device; and wherein
said reservoir (200) is disposed outside said brake fluid conduit (A) from said brake-fluid pressure generating device to said first and second wheel braking-force generating devices and contains brake fluid of a predetermined amount.

3. The brake apparatus as recited in claim 2, wherein said valve (610) comprises:
a control valve (610) disposed in said brake fluid conduit (A), which is switched between a first control state to cause said brake fluid conduit to be in a communicating state and a second control state allowing generation of a predetermined differential pressure between brake-fluid pressure on said first and second wheel braking-force generating devices side and brake-fluid pressure on said brake-fluid pressure generating device side,
wherein said control valve (610) is controlled at said second control state when discharge of brake fluid is being performed by said discharging device (601) of which a discharge port is connected to said brake fluid conduit (A) between said control valve (610) and said wheel braking-force generating device (504, 505).

4. The brake apparatus as recited in claim 1, wherein said pressure increasing device (90, 101, 200, 300, 301) comprises:
a discharge device (101) which performs increase of brake fluid pressure by discharging brake fluid generated by the brake-fluid pressure generating device toward one of said first and second wheel braking-force generating devices whereat adjustment of brake-fluid pressure by the brake-fluid pressure adjusting device has not yet been started, in order that the brake-fluid pressure applied to the wheel braking-force generating device is increased to exceed the brake-fluid pressure generated by the brake-fluid pressure generating device; and
a maintaining device (90) which maintains brake fluid pressure increased by said discharging device.

5. The brake apparatus as recited in claim 1, wherein said pressure increasing device (90, 101, 200, 300, 301) comprises:
a discharging device (101) which performs increase of brake fluid pressure by discharging brake fluid released from one of said first and second wheel braking-force generating devices subject to adjustment of brake-fluid pressure being started by the brake-fluid pressure adjusting device, toward another of said first and second wheel braking-force generating device whereat adjustment of brake-fluid pressure by the brake-fluid pressure adjusting device has not yet been started, in order that the brake-fluid pressure applied to the wheel braking-force generating device is increased to exceed the brake-fluid pressure generated by the brake-fluid pressure generating device; and
a maintaining device (90) which maintains brake fluid pressure increased by said discharging device.

6. The brake apparatus as recited in claim 4, wherein said maintaining device (90) maintains brake-fluid pressure in said brake fluid conduit (A2) extending from a brake-fluid discharging side of said discharging device (101) to said first and second wheel braking-force generating devices (4, 5) so that brake-fluid pressure at the brake-fluid pressure generating device (3) is established to be a value attenuated at a predetermined ratio relative to brake-fluid pressure in said brake fluid conduit (A2) extending from said brake-fluid discharging side of said discharging device to said first and second wheel braking-force generating devices.

7. The brake apparatus as recited in claim 2, wherein said brake-fluid pressure-adjusting device (100) comprises:
a pressure-increasing control valve (300, 301) disposed for each wheel in said brake fluid conduit to cause the brake fluid conduit to be communicated during non-adjustment of brake fluid pressure and during pressure-increasing adjustment and to be interrupted during pressure-reducing adjustment;
a pressure-reducing control valve (302, 303) disposed for each wheel in a conduit for pressure-reducing use from said brake fluid conduit to said reservoir to cause said conduit for pressure-reducing use to be communicated during pressure-reducing adjustment and to be interrupted during pressure-increasing adjustment and during non-adjustment of brake fluid pressure,
wherein said discharging device discharges brake fluid to said brake fluid conduit between said pressure-increasing control valve and the maintaining device.

8. A vehicle comprising a brake apparatus as recited in claim 1, wherein the first wheel is a front-right wheel of said vehicle and the second wheel is a rear-left wheel of said vehicle.

## Patentansprüche

1. Bremsvorrichtung zur Verwendung in einem Fahrzeug, welche aufweist:
eine Bremsflüssigkeitsdruckerzeugungsvorrichtung (3) zum Erzeugen eines Bremsflüssigkeitsdrucks in Übereinstimmung mit dem Zustand einer Bremsenbetätigung durch einen Fahrer;
eine erste Radbremskrafterzeugungsvorrichtung (4), welche den Bremsflüssigkeitsdruck von der Bremsflüssigkeitsdruckerzeugungsvorrichtung erhält und geeignet ist, eine Bremskraft an einem ersten Rad zu erzeugen;
eine zweite Radbremskrafterzeugungsvorrichtung (5), welche den Bremsflüssigkeitsdruck von der Bremsflüssigkeitsdruckerzeugungsvorrichtung erhält und geeignet ist, eine Bremskraft an einem zweiten Rad zu erzeugen,
eine Bremsflüssigkeitsleitung (A), um die Bremsflüssigkeitsdruckerzeugungsvorrichtung und die erste und zweite Radbremskrafterzeugungsvorrichtung miteinander zu verbinden;
eine Bremsflüssigkeitsdruckeinstellungsvorrichtung (100), welche einen Bremsflüssigkeitsdruck, welcher auf die erste und die zweite Radbremskrafterzeugungsvorrichtung aufgebracht wird, in Reaktion auf einen Straßenoberflächenreibungsgrenzeneingangsdatenwert, welcher für eine Straßenoberflächenreibungsgrenze in einen Bremszustand jedes der ersten und zweiten Räder steht, so einstellt, daß ein Bremszustand des ersten und zweiten Rades optimal eingestellt wird; und
eine Druckerhöhungsvorrichtung (90, 101, 200, 300, 301), welche zu einer Zeit, zu der eine Einstellung eines auf entweder die erste oder zweite Radbremskrafterzeugungsvorrichtung aufgebrachten Bremsflüssigkeitsdrucks durch die Bremsflüssigkeitsdruckeinstellungsvorrichtung begonnen wird, einen auf eine andere Radbremskrafterzeugungsvorrichtung, auf welche eine Einstellung des Bremsflüssigkeitsdrucks durch die Bremsflüssigkeitsdruckeinstellungsvorrichtung noch nicht unternommen worden ist, aufgebrachten Bremsflüssigkeitsdruck erhöht, um den Bremsflüssigkeitsdruck aufgrund der Bremsflüssigkeitsdruckerzeugungsvorrichtung zu übersteigen;
***dadurch gekennzeichnet, daß***
die Bremsflüssigkeitsleitung (A) ein Ventil (90; 610) aufweist, welches in der Lage ist, in einem zweiten Abschnitt (A2) der Leitung (A), welcher mit der ersten und zweiten Radbremskrafterzeugungsvorrichtung (4, 5) in Verbindung steht, einen Druck herzustellen, der eine Funktion des Drucks in einem ersten Abschnitt (A1) der Leitung (A) ist, welcher mit der Bremsflüssigkeitsdruckerzeugungsvorrichtung (3) in Verbindung steht, und höher als dieser ist; und
Bremsflüssigkeit, welche zum Reduzieren des Bremsflüssigkeitsdrucks an der ersten Radbremskrafterzeugungsvorrichtung (4) von der ersten Radbremskrafterzeugungsvorrichtung (4) entfernt und in einem Reservoir (200;700) gespeichert wird, verwendet wird, um den Bremsflüssigkeitsdruck an der zweiten Radbremskrafterzeugungsvorrichtung (5) zu erhöhen.

2. Bremsvorrichtung nach Anspruch 1, wobei die Druckerhöhungseinrichtung (90, 101, 200, 300, 301) aufweist:
eine Abgebevorrichtung (101), welche Bremsflüssigkeit von dem Reservoir (200; 700) nimmt, zu mindestens einer der ersten und zweiten Radbremskrafterzeugungsvorrichtung hin, an der eine Einstellung des Bremsflüssigkeitsdrucks durch die Bremsflüssigkeitsdruckeinstellungsvorrichtung noch nicht begonnen worden ist, Bremsflüssigkeit abgibt und einen Bremsflüssigkeitsdruck, welcher auf mindestens eine der ersten und zweiten Radbremskrafterzeugungsvorrichtungen aufgebracht wird, erhöht, um den Bremsflüssigkeitsdruck, welcher durch die Bremsflüssigkeitsdruckerzeugungsvorrichtung erzeugt wird, zu übersteigen; und wobei
das Reservoir (200) außerhalb der Bremsflüssigkeitsleitung (A) von der Bremsflüssigkeitsdruckerzeugungsvorrichtung zu den ersten und zweiten Radbremskrafterzeugungsvorrichtungen angeordnet ist und Bremsflüssigkeit einer vorbestimmten Menge enthält.

3. Bremsvorrichtung nach Anspruch 2, wobei das Ventil (610) aufweist:
ein in der Bremsflüssigkeitsleitung (A) angeordnetes Stellventil (610), welches zwischen einem ersten Stellzustand, um die Bremsflüssigkeitsleitung dazu zu veranlassen, in einem Verbindungszustand zu sein, und einem zweiten Stellzustand, welcher die Erzeugung eines vorbestimmten Differenzdrucks zwischen dem Bremsflüssigkeitsdruck auf der ersten und zweiten Radbremskrafterzeugungsvorrichtungsseite und dem Bremsflüssigkeitsdruck auf der Bremsflüssigkeitsdruckerzeugungsvorrichtungsseite erlaubt, geschaltet wird,
wobei das Stellventil (610) in den zweiten Stellzustand gestellt wird, wenn eine Abgabe von Bremsflüssigkeit durch die Abgebevorrichtung (601) durchgeführt wird, von der ein Abgebeanschluß mit der Bremsflüssigkeitsleitung (A) zwischen dem Stellventil (610) und der Radbremskrafterzeugungsvorrichtung (504), (505) verbunden ist.

4. Bremsvorrichtung nach Anspruch 1, wobei die Druckerhöhungsvorrichtung (90, 101, 200, 300, 301) aufweist:
eine Abgebevorrichtung (101), welche einen Anstieg eines Bremsflüssigkeitsdrucks durch Abgeben von Bremsflüssigkeit, welche durch die Bremsflüssigkeitsdruckerzeugungsvorrichtung erzeugt wird, in Richtung einer der ersten und zweiten Radbremskrafterzeugungsvorrichtungen, an der eine Einstellung des Bremsflüssigkeitsdrucks durch die Bremsflüssigkeitsdruckeinstellungseinrichtung noch nicht begonnen worden ist, durchführt, damit der auf die Radbremskrafterzeugungsvorrichtung aufgebrachte Bremsflüssigkeitsdruck erhöht wird, um den von der Bremsflüssigkeitsdruckerzeugungsvorrichtung erzeugten Bremsflüssigkeitsdruck zu übersteigen; und
eine Halteeinrichtung (19), welche den von der Abgebevorrichtung erhöhten Bremsflüssigkeitsdruck hält.

5. Bremsvorrichtung nach Anspruch 1, wobei die Druckerhöhungsvorrichtung (90, 101, 200, 300, 301) aufweist:
eine Abgebevorrichtung (101), welche ein Anheben eines Bremsflüssigkeitsdrucks durch Abgeben von Bremsflüssigkeit, welche von einer der ersten und zweiten Radbremskrafterzeugungsvorrichtungen, welche ein Objekt einer durch die Bremsflüssigkeitsdruckeinstellungsvorrichtung begonnenen Einstellung von Bremsflüssigkeitsdruck ist, in Richtung einer anderen der ersten und zweiten Radbremskrafterzeugungsvorrichtung, an der eine Einstellung des Bremsflüssigkeitsdrucks durch die Bremsflüssigkeitsdruckeinstellungsvorrichtung noch nicht begonnen worden ist, abgelassen wird, durchführt, damit der auf die Radbremskrafterzeugungsvorrichtung aufgebrachte Bremsflüssigkeitsdruck erhöht wird, um den durch die Bremsflüssigkeitsdruckerzeugungsvorrichtung erzeugten Bremsflüssigkeitsdruck zu übersteigen; und
eine Haltevorrichtung (90), welche den durch die Abgebevorrichtung erhöhten Bremsflüssigkeitsdruck hält.

6. Bremsvorrichtung nach Anspruch 4, wobei die Haltevorrichtung (90) den Bremsflüssigkeitsdruck in der Bremsflüssigkeitsleitung (A2), welche sich von der Bremsflüssigkeitsabgebeseite der Abgebevorrichtung (101) zu den ersten und zweiten Radbremskrafterzeugungsvorrichtungen (4,5) erstreckt, hält, so daß ein Bremsflüssigkeitsdruck an der Bremsflüssigkeitsdruckerzeugungsvorrichtung (3) hergestellt wird, um ein Wert zu sein, welcher bei einem vorbestimmten Verhältnis relativ zu einem Bremsflüssigkeitsdruck in der Bremsflüssigkeitsleitung (A2), welche sich von der Bremsflüssigkeitsabgebeseite der Abgebevorrichtung zu den ersten und zweiten Radbremskrafterzeugungsvorrichtungen erstreckt, abgeschwächt wird.

7. Bremsvorrichtung nach Anspruch 2, wobei die Bremsflüssigkeitsdruckeinstellungsvorrichtung (100) aufweist:
ein für jedes Rad in der Bremsflüssigkeitsleitung angeordnetes Druckerhöhungsstellventil (300, 301), um die Bremsflüssigkeitsleitung dazu zu veranlassen, während eines Nichteinstellens von Bremsflüssigkeitsdruck und während Druck erhöhenden Einstellens durchgängig zu sein und während Druck reduzierenden Einstellens unterbrochen zu sein;
ein für jedes Rad in einer Leitung für druckreduzierende Verwendung von der Bremsflüssigkeitsleitung zu dem Reservoir angeordnetes Druckreduzierstellventil (302, 303), um die Leitung für druckreduzierende Verwendung dazu zu veranlassen, während Druck reduzierenden Einstellens durchgängig zu sein und während Druck erhöhenden Einstellens und während Nichteinstellens von Bremsflüssigkeitsdruck unterbrochen zu sein,
wobei die Abgebevorrichtung Bremsflüssigkeit zu der Bremsflüssigkeitsleitung zwischen dem Druckerhöhungssteuerventil und der Haltevorrichtung abgibt.

8. Fahrzeug, welches eine Bremsvorrichtung nach Anspruch 1 aufweist, wobei das erste Rad ein vorderes rechtes Rad des Fahrzeugs und das zweite Rad ein hinteres linkes Rad des Fahrzeugs ist.

## Revendications

1. Dispositif de freinage pour utilisation dans un véhicule, comprenant :
un dispositif de génération de pression de fluide des freins (3) pour générer une pression de fluide de frein en correspondance avec un état d'actionnement des freins par un conducteur ;
un premier dispositif de génération de force de freinage des roues (4) qui reçoit la pression de fluide des freins du dispositif de génération de pression de fluide des freins et est approprié pour générer une force de freinage au niveau d'une première roue ;
un second dispositif de génération de force de freinage des roues (5) qui reçoit la pression de fluide des freins depuis ledit dispositif de génération de pression de fluide des freins et est approprié pour générer une force de freinage au niveau d'une seconde roue ;
une conduite de fluide des freins (A) pour faire communiquer ledit dispositif de génération de pression de fluide des freins et lesdits premier et second dispositifs de génération de force de freinage des roues ;
un dispositif d'ajustement de pression de fluide des freins (100) qui ajuste la pression de fluide des freins appliquée audits premier et second dispositifs de génération de force de freinage des roues en réponse à une entrée à des données d'entrée de limite de frottement de surface de revêtement routier représentatives d'une limite de frottement de la surface de revêtement routier dans un état de freinage de chacune desdites première et seconde roues de façon à ajuster à l'optimal un état de freinage desdites première et seconde roues ; et
un dispositif d'augmentation de pression (90, 101, 200, 300, 301) qui augmente, au moment où l'ajustement de la pression de fluide des freins appliquée à l'un quelconque dudit premier ou dudit second dispositif de génération de force de freinage des roues par ledit dispositif d'ajustement de pression de fluide des freins est lancé, la pression de fluide des freins appliquée à un autre dispositif de génération de force de freinage des roues auquel l'ajustement de la pression de fluide des freins par ledit dispositif d'ajustement de pression de fluide des freins n'a pas encore été soumise, pour dépasser la pression de fluide des freins due au dispositif de génération de pression de fluide des freins ; **caractérisé en ce que**
ladite conduite de fluide des freins (A) comprend une soupape (90 ; 610) capable d'établir une pression dans une seconde partie (A2) de ladite conduite (A) faisant communiquer lesdits premier et second dispositifs de génération de force de freinage des roues (4, 5) qui est une fonction de et plus élevée qu'une pression dans la première partie (A1) de ladite conduite (A) communiquant avec ledit dispositif de génération de pression de fluide des freins (3) ; et
le fluide des freins enlevé du premier dispositif de génération de force de freinage des roues (4) et accumulé dans un réservoir (200 ; 700) pour réduire la pression de fluide des freins sur ledit premier dispositif de génération de force de freinage des roues (4) est utilisé pour augmenter la pression de fluide des freins sur ledit second dispositif de génération de force de freinage des roues (5).

2. Dispositif de freinage selon la revendication 1, dans lequel ledit dispositif d'augmentation de pression (90, 101, 200, 300, 301) comprend :
un dispositif de décharge (101) qui prend le fluide des freins depuis ledit réservoir (200 ; 700), décharge le fluide des freins vers au moins un desdits premier et second dispositifs de génération de force de freinage des roues tandis que l'ajustement de la pression de fluide des freins par ledit dispositif d'ajustement de pression de fluide des freins n'a pas encore été commencé et augmente la pression de fluide des freins appliquée audit au moins un desdits premier et second dispositifs de génération de force de freinage des roues pour dépasser la pression de fluide des freins générée par ledit dispositif de génération de pression de fluide des freins ; et dans lequel
ledit réservoir (200) est disposé à l'extérieur de ladite conduite de fluide des freins (A) à partir dudit dispositif de génération de pression de fluide des freins audits premier et second dispositifs de génération de force de freinage des roues et contient le fluide des freins d'une quantité prédéterminée.

3. Dispositif de freinage selon la revendication 2, dans lequel ladite soupape (610) comprend :
une soupape de commande (610) disposée dans ladite conduite de fluide des freins (A) qui est commutée entre un premier état de commande pour amener la conduite de fluide des freins à être dans un état de communication et un second état de commande permettant la génération d'une pression différentielle prédéterminée entre la pression de fluide des freins sur le côté desdits premier et second dispositifs de génération de force de freinage des roues et ladite pression de fluide des freins sur le côté dispositif de génération de pression de fluide des freins,
dans lequel ladite soupape de commande (610) est commandée audit second état de commande lorsque la décharge de fluide des freins est effectuée par ledit dispositif de décharge (601) dont un orifice de décharge est raccordé à ladite conduite de fluide des freins (A) entre ladite soupape de commande (610) et ledit dispositif de génération de force de freinage des roues (504, 505).

4. dispositif de freinage selon la revendication 1, dans lequel ledit dispositif d'augmentation de pression (90, 101, 200, 300, 301) comprend :
un dispositif de décharge (101) qui effectue une augmentation de la pression de fluide des freins en déchargeant le fluide des freins généré par le dispositif de génération de pression de fluide des freins vers un desdits premier et second dispositifs de génération de force de freinage des roues tandis que l'ajustement de la pression de fluide des freins par le dispositif d'ajustement de pression de fluide des freins n'a pas encore été commencé, afin que la pression de fluide des freins appliquée au dispositif de génération de force de freinage des roues soit accrue pour dépasser la pression de fluide des freins générée par le dispositif de génération de pression de fluide des freins ; et
un dispositif de maintien (90) qui maintient la pression de fluide des freins accrue par ledit dispositif de décharge.

5. dispositif de freinage selon la revendication 1, dans lequel ledit dispositif d'augmentation de pression (90, 101, 200, 300, 301) comprend :
un dispositif de décharge (101) qui effectue une augmentation de la pression de fluide des freins en déchargeant le fluide des freins libéré depuis un desdits premier et second dispositifs de génération de force de freinage des roues soumis à l'ajustement de la pression de fluide des freins qui est lancé par le dispositif d'augmentation de pression vers un autre desdits premier et second dispositifs de génération de force de freinage des roues tandis que l'ajustement de la pression de fluide des freins par le dispositif d'augmentation de pression n'a pas encore été commencé, afin que la pression de fluide des freins appliquée au dispositif de génération de force de freinage des roues soit accrue pour dépasser la pression de fluide des freins générée par le dispositif de génération de pression de fluide des freins ; et
un dispositif de maintien (90) qui maintient la pression de fluide des freins accrue par ledit dispositif de décharge.

6. Dispositif de freinage selon la revendication 4, dans lequel ledit dispositif de maintien (90) maintient la pression de fluide des freins dans ladite conduite de fluide des freins (A2) s'étendant depuis un côté décharge de fluide des freins dudit dispositif de décharge (101) auxdits premier et second dispositifs de génération de force de freinage des roues (4, 5) de sorte que la pression de fluide des freins au niveau du dispositif de génération de pression de fluide des freins (3) est établie pour être une valeur atténuée à un rapport prédéterminé par rapport à la pression de fluide des freins dans ladite conduite de fluide des freins (A2) s'étendant depuis le côté décharge de fluide des freins dudit dispositif de décharge auxdits premier et second dispositifs de génération de force de freinage des roues.

7. Dispositif de freinage selon la revendication 2, dans lequel ledit dispositif d'ajustement de pression de fluide des freins (100) comprend :
une soupape de commande d'augmentation de pression (300, 301) disposée pour chaque roue dans ladite conduite de fluide des freins pour amener la conduite de fluide des freins à être en communication pendant le non-ajustement de la pression de fluide des freins et pendant l'ajustement de l'augmentation de la pression et être interrompue pendant l'ajustement de réduction de pression ;
une soupape de commande de réduction de pression (302, 303) disposée pour chaque roue dans une conduite pour réduire la pression d'utilisation de ladite conduite de fluide des freins vers ledit réservoir pour amener ladite conduite pour utilisation de réduction de pression à être en communication pendant l'ajustement de réduction de pression et être interrompue pendant l'ajustement d'augmentation de pression et pendant le non-ajustement de la pression de fluide des freins,
dans lequel ledit dispositif de décharge décharge le fluide des freins vers ladite conduite de fluide des freins entre ladite soupape de commande d'augmentation de pression et ledit dispositif de maintien.

8. Véhicule comprenant un dispositif de freinage selon la revendication 1, dans lequel la première roue est une roue avant droite dudit véhicule et la seconde roue est une roue arrière gauche dudit véhicule.
